# EUROPÄISCHE PATENTSCHRIFT

(11) **EP 2 321 548 B1**
(45) Veröffentlichungstag und Bekanntmachung des Hinweises auf die Patenterteilung: **05.03.2014**
(21) Anmeldenummer: 09777578.7
(22) Anmeldetag: 31.07.2009
(51) Int. Cl.: F16D 65/14

(54) **PNEUMATISCH BETÄTIGBARE SCHEIBENBREMSE**
PNEUMATICALLY ACTUABLE DISK BRAKE
FREIN À DISQUE ACTIONNÉ PNEUMATIQUEMENT

(30) Priorität: 01.08.2008 DE 102008036032
(43) Veröffentlichungstag der Anmeldung: 18.05.2011
(73) Patentinhaber: Knorr-Bremse Systeme für Nutzfahrzeuge GmbH, 80809 München (DE)
(72) Erfinder: BAUMGARTNER, Johann, 85368 Moosburg (DE); GRUBER, Robert, 83539 Pfaffing (DE); PERICEVIC, Aleksandar, 80636 München (DE); GEISSLER, Steffen, 63110 Rodgau (DE); TRIMPE, Robert, 82234 Wessling (DE)
(74) Vertreter: Mattusch, Gundula
(86) Internationale Anmeldenummer: PCT/EP2009/005561
(87) Internationale Veröffentlichungsnummer: WO 2010/012484

(56) Entgegenhaltungen:
- EP-A- 1 319 858
- WO-A-02/14127
- WO-A-2007/082658
- DE-T5- 10 392 252

## Beschreibung

Die Erfindung betrifft eine pneumatisch betätigbare Scheibenbremse nach dem Oberbegriff des Anspruchs 1.

Eine solche pneumatisch betätigbare Scheibenbremse ist beispielsweise aus der EP 1 230 491 B1 bekannt.

Dabei ist der an einem Ende als Exzenter ausgebildete, sich am Bremssattel abstützende Bremshebel, aufgrund der hohen zu übertragenden Betätigungskräfte sehr massiv als Stahl-Schmiedeteil oder aus einem hochfesten Eisenguss-Werkstoff hergestellt.

Aufgrund des großen Hebel-Übersetzungsverhältnisses, beispielsweise i = L1: e = 15, 6: 1 (L1 = Länge des Hebelarms, e = Exzentrizität), das sich aus dem Verhältnis zwischen aufzubringender Bremskraft und aufgebrachter Kraft des Bremszylinders ergibt, aus der wiederum ein entsprechend großer Schwenkwinkel des Bremshebels resultiert, stellen sich entsprechend hohe Reibungsverluste der Exzenter-Lagerung ein. Zu deren Reduzierung werden Wälzlagerhalbschalen eingesetzt, die die Exzenter-Lagerung umhüllen.

Die Gestaltung des Hebels ist bei der EP 553 105 B1, die keine pneumatische Scheibenbremse zeigt, so vorgenommen, dass durch die Kraftübertragung von den abstützenden Wälzlagern auf das Exzenterlager im wesentlichen keine Biegemomente und daraus resultierende Verformungen im Bremssattel hervorgerufen werden.

Allerdings ist die Realisierung solcher Wälzlagerungen nur mit einem erheblichen Fertigungsaufwand möglich, mit entsprechend hohen Herstellungskosten.

Darüber hinaus ist eine solche Wälzlagerung naturgemäß relativ störungsanfällig, was einer optimierten Standzeit entgegensteht.

In der genannten EP 1 230 491 B1 ist deshalb vorgeschlagen, zur Lagerung des Bremshebels am Bremssattel ausschließlich Gleitlager einzusetzen, die sich neben niedrigen Herstellungskosten durch eine besonders große Robustheit auszeichnen.

Allerdings liegen die Reibbeiwerte der verwendeten wartungsfreien Gleitlager um ein Vielfaches über dem Rollwiderstandswert der Wälzlager, was sich natürlich auf die Bereitstellung einer vom Bremszylinder aufzubringenden Bremskraft auswirkt.

Durch den relativ großen Lagerdurchmesser ergibt sich ein Abstand von der Exzenterdrehachse zu einem Angriffspunkt an den zuspannseitigen Bremsbelag, aus dem ein zusätzliches, auf den Bremshebel wirkendes Biegemoment resultiert. Um eine daraus sich ergebende Verformung des Bremshebels gering zu halten, wird dieser sehr massiv ausgeführt, wenngleich die genannten Verformungen sowie der daraus folgende vergrößerte Hubbedarf des Bremszylinders nicht gänzlich vermieden werden können.

Insgesamt sind die bekannten gattungsgemäßen Scheibenbremsen, insbesondere hinsichtlich des benötigten Bauraums, des vorhandenen Gewichts und des Wirkungsgrads nicht geeignet, den diesbezüglich gestellten Anforderungen gerecht zu werden.

In der WO 2007/082658 A1 ist eine Scheibenbremse geoffenbart, bei der beidseitig eines Bremsstempels Druckstempel vorgesehen sind, die durch eine den Bremssattel zum Bremsbelag hin verschließende Verschlussplatte gerührt sind, wobei der Durchtrittsbereich zwischen den Druckstempeln und der fest mit dem Bremssattel verbundenen Verschlussplatte durch jeweils einen Faltenbalg abgedichtet ist. Rückseitig stützen sich die Druckstempel über Lagerkugeln am Bremssattelrücken ab.

Der Erfindung liegt die Aufgabe zugrunde, eine Scheibenbremse der gattungsgemäßen Art so weiterzuentwickeln, die hinsichtlich ihres Bauraums, ihres Gewichts, ihres Wirkungsgrads und ihrer Herstellungskosten optimiert ist.

Diese Aufgabe wird durch eine Scheibenbremse mit den Merkmalen des Anspruchs 1 gelöst.

Durch die erfindungsgemäß vorgesehene Selbstverstärkungseinrichtung, die bislang ausschließlich bei elektromechanisch betätigbaren Scheibenbremsen zum Einsatz kommt (WO 2007/082658 A1), wird der Leistungsbedarf des Bremszylinders reduziert, mit der Folge einer wesentlichen Bauraumverkleinerung, bei gleichbleibendem Betriebsverhalten der Bremse.

Bereits mit relativ geringen Selbstverstärkungsfaktoren ist eine erhebliche Reduzierung der Baugröße des Bremszylinders möglich. Dabei wird die Selbstverstärkung durch eine entsprechende Dimensionierung von Keil- bzw. Rampenwinkeln so gewählt, dass sich auch bei einem maximal möglichen Reibbeiwert der Bremsbeläge noch ein sicheres selbsttätiges Lösen der Bremse ergibt.

Anders als bei elektromotorischen Scheibenbremsen muss damit der Krafterzeuger zum Zuspannen der Bremse nicht auch zum Lösen genutzt werden.

Die Baumaßverkleinerung ist insbesondere durch den geringeren Hub möglich, der beispielsweise von 65 mm auf 24 mm reduziert ist. Gleichermaßen wird auch die benötigte Betätigungsenergie bis auf ein Drittel der bisherigen Betätigungsenergie reduziert.

Dies ermöglicht eine deutlich geringere Dimensionierung der Gleitlagerelemente des Bremsehebels, wodurch auch das auf den Bremshebel einwirkende Biegemoment vermindert wird.

Neben diesem angestrebten und sich durch die Erfindung ergebenden Effekt, wird auch eine signifikante Verminderung der Lagerreibung erreicht, die zum einen durch die kleinere Dimensionierung und zum anderen durch den minimierten notwendigen Schwenkwinkel des Bremshebels erzielt wird, was zu einer Verbesserung des mechanischen Wirkungsgrads führt.

Die genannte Reduzierung des Schwenkwinkels ergibt sich aus einer Verkleinerung des Hebelübersetzungsverhältnisses, das, wie eingangs erwähnt, bei einer Scheibenbremse nach dem Stand der Technik bei 15,6:1 liegt, während es durch die Erfindung in einem Bereich von 7:1 bis 10:1 liegt, bevorzugt bei 7,5:1, also bemerkenswert kleiner ist.

Mithilfe der Erfindung ist somit eine Baulängenreduzierung des Bremszylinders möglich, ebenso wie eine Gewichtsersparnis, die den diesbezüglichen Anforderungen entspricht, aus denen sich in der Gesamtheit eine Kraftstoffersparnis herleitet. Hierzu trägt auch bei, dass durch die verminderte Biegebeanspruchung des Bremshebels dieser gewichtsoptimiert ausgelegt werden kann, wobei der Bremshebel lediglich mit einem, bezogen auf die Drehachse der Bremsscheibe zentrisch in der Achsebene angreifenden Bremsstempel korrespondiert, der durch zwei, beidseitig dazu angeordnete, einerseits am Bremssattel und andererseits am zuspannseitigen Bremsbelag angreifende Druckstempel unterstützt wird, die ihre Reaktionskraft direkt in den Bremssattel ableiten.

Der Bremshebel wird vorzugsweise als Umformteil ohne spanende Bearbeitung hergestellt und kann als relativ dünnwandiges Schmiedeteil mit geprägten Lagersitzen ausgebildet sein, sozusagen als Präzisions-Schmiedeteil, oder als Blechformteil. Prinzipiell ist selbstverständlich auch eine Fertigung aus einem hochfesten Eisengusswerkstoff mit nachfolgender spanender Bearbeitung denkbar.

Nach einem weiteren Gedanken der Erfindung ist der Bremshebel mit einem abgewinkelten, zumindest teilweise umlaufenden Rand versehen, durch den eine hohe Steifigkeit bei geringem Gewicht erreicht wird. Zusätzlich können Versteifungssicken oder dergleichen eingebracht werden.

Zur Steigerung der Festigkeit kann der Bremshebeleinsatz gehärtet oder vergütet sein.

Die Lageraufnahmen, in Form von Kalotten, sind mit einer Reibungs- und/oder verschleißreduzierenden Beschichtung versehen oder mit Metall-Verbund-Gleitlager-Schalen ausgekleidet.

Für den Antrieb einer Nachstelleinrichtung kann am Bremshebel eine für den Eingriff in ein Nachsteller-Antriebsrad geeignete Zahnkontur eingeprägt oder als separates Teil zum Beispiel durch Schweißen befestigt sein.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in einer geschnittenen Draufsicht
- Figur 2: einen weiteren, teilweise geschnittenen Teilausschnitt der Scheibenbremse in einer perspektivischen Ansicht
- Figur 3: einen Bremshebel der Scheibenbremse in einer perspektivischen Ansicht
- Figur 4: einen Längsschnitt durch den Bremshebel gemäß der Linie IV-IV in Figur 3.

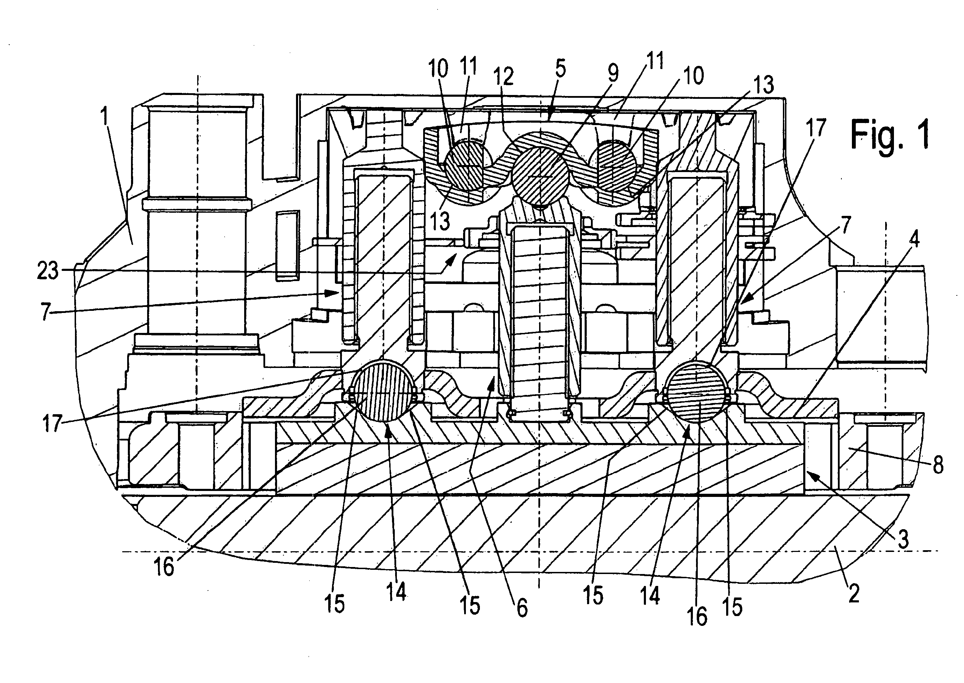

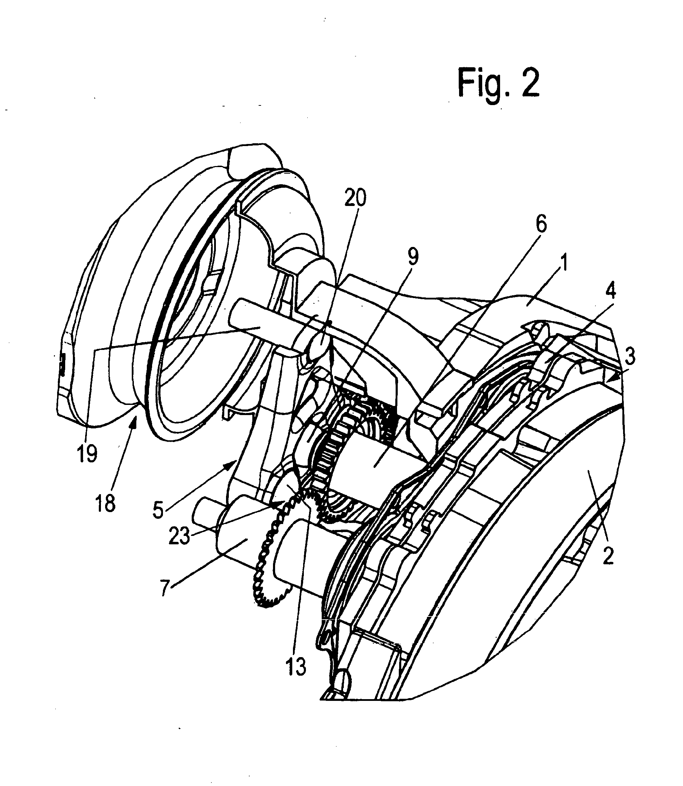

In den Figuren 1 und 2 ist eine selbstverstärkende Scheibenbremse dargestellt, mit einem an einem ortsfesten Bremsträger 8 gehaltenen Bremssattel 1, einem zuspannseitigen Bremsbelag 3 und einem nicht dargestellten reaktionsseitigen Bremsbelag, die gegen eine Bremsscheibe 2 pressbar sind.

Zum Zuspannen der Bremsbeläge ist eine Zuspanneinrichtung in Form eines Bremshebels 5 und eines Bremsstempels 6 vorgesehen, über den der zuspannseitige Bremsbelag 3 in axialer Richtung, bezogen auf die Drehachse der Bremsscheibe 2 bewegbar ist.

Dabei greift ein mit Druckluft beaufschlagbarer Bremszylinder 18 (Figur 2) über einen angeschlossenen Stößel 19 am Bremshebel 5 an, wobei der Bremshebel 5 im

Angriffsbereich des Stößels 19 eine Lagerkalotte 20 aufweist, die an die ballig ausgeformte Stirnseite des Stößels 19 angepasst ist.

Der Bremshebel 5 ist um eine Exzenterdrehachse gegen den Bremsstempel 6 drehbar, die durch zwei kugelförmige Lagerelemente 10 gebildet wird, die einerseits in Kalotten 13 des Bremshebels 5 und andererseits in Kalottenansätzen 11 des Bremssattels 1 einliegen, wobei die Kalottenansätze 11 praktisch jeweils ein Widerlager bilden.

Zwischen den beiden Stützlager bildenden Lagerelementen 10 bzw. den zugeordneten Kalotten 13 ist eine an eine Lagerkugel 9 angepasste Ausbauchung 12 im Bremshebel 5 vorgesehen, in der die Lagerkugel 9 einliegt, die andererseits am Bremsstempel 6 gehalten ist.

Dabei wird die Exzentrizität des Bremshebels 5 bestimmt vom Mittelpunktabstand der Kalotten 13 bzw. der Lagerelemente 10 zur Ausbauchung 12 bzw. der einliegenden Lagerkugel 9, wobei die Lagerkugel 9 in Bezug auf die Lagerkalotte 20 oberhalb der Lagerelemente 10 angeordnet ist.

Des Weiteren ist eine Selbstverstärkungseinrichtung vorgesehen, die Spreizlager 14 aufweist, denen jeweils ein Druckstempel 7 zugeordnet ist, die mit einer Nachstelleinrichtung 23 zur verschleißbedingten Nachstellung des Bremsbelages 3 in Eingriff stehen.

Die Druckstempel 7 sind mit ihrem dem Bremsbelag 3 zugewandten Endbereich in einer Führungsplatte 4 gehalten, die in dem Bremsträger 8 in Zuspannrichtung verschiebbar ist.

Jede Spreizlagerung 14 weist eine im zugeordneten Druckstempel 7 stirnseitig eingelassene und darin in einer Gleitlagerschale 17 positionierte Lagerkugel 16 auf, die andererseits in einer kalottenförmigen Vertiefung einliegt, deren Seitenwand im Sinne von ansteigenden Rampen 15 ausgebildet ist.

Bei einer Bremsung, wenn also mittels des Bremshebels 5 der Bremsbelag 3 gegen die Bremsscheibe 2 gepresst wird, entstehen Umfangskräfte, durch die der Bremsbelag 3 in Drehrichtung der Bremsscheibe 2 verschoben wird, unter Abstandsveränderung des Bremsbelages 3 zum Druckstempel 7.

Beim Lösen der Bremse wird der Bremsbelag 3 durch eine nicht dargestellte Rückstellfeder in eine sozusagen entspannte Ausgangsstellung zurückgeführt, in der die Lagerkugel 16 praktisch funktionsfrei in der Vertiefung des Bremsbelages 3 einliegt.

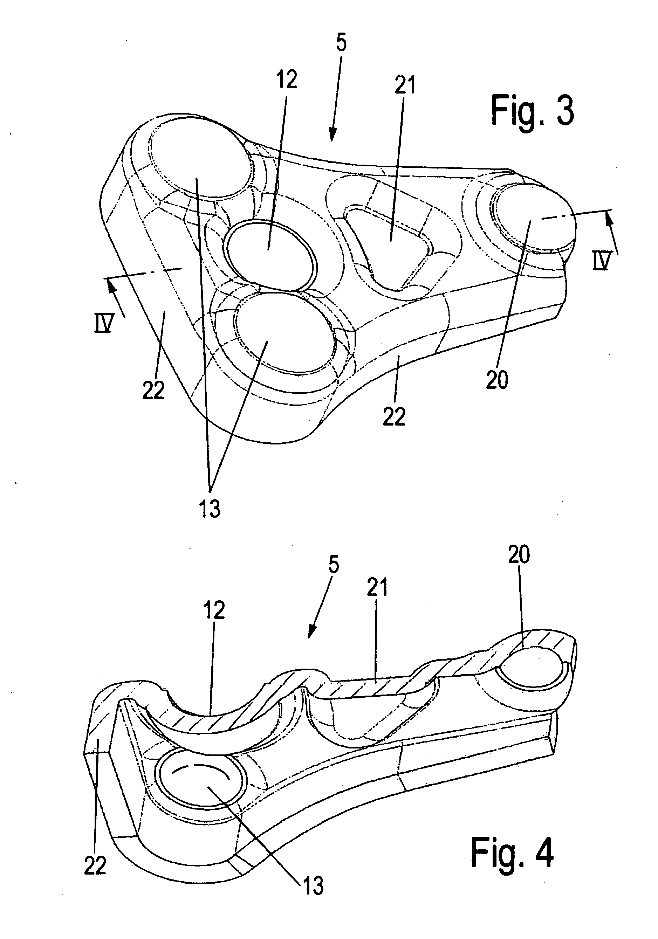

In den Figuren 3 und 4 ist ein Ausführungsbeispiel des Bremshebels 5 gezeigt, der hierbei beispielsweise als Blechformteil ausgebildet ist.

Es ist zu erkennen, dass der Bremshebel 5 eine etwa trapezförmige Seitenfläche aufweist, an deren Breitseite die beiden Kalotten 13 ausgestülpt sind, während am gegenüberliegenden Endbereich die Lagerkalotte 20 gleichgerichtet ausgeformt ist.

Zwischen den beiden Kalotten 13, in Richtung der Lagerkalotte 20 abständig dazu, ist die kalottenförmige Ausbauchung 12 eingebracht und zwar mit ihrer konkaven Innenseite entgegengesetzt der der Ausformungen der Kalotten 13 und der Lagerkalotte 20.

Zur Versteifung des Bremshebels 5 insgesamt weist dieser einen teilweise umlaufenden, abgewinkelten Rand 22 auf, der sich in Richtung der Ausstülpung der Ausbauchung 12 erstreckt und lediglich in dem der Lagerkalotte 20 zugeordneten Endbereich ausgespart ist.

Weiter ist zur Erhöhung der Biegesteifigkeit zwischen der Ausbauchung 12 und der Lagerkalotte 20 eine Vertiefung 21 eingebracht.

### Bezugszeichenliste

- 1: Bremssattel
- 2: Bremsscheibe
- 3: Bremsbelag
- 4: Führungsplatte
- 5: Bremshebel
- 6: Bremsstempel
- 7: Druckstempel
- 8: Bremsträger
- 9: Lagerkugel
- 10: Lagerelement
- 11: Kalottenansatz
- 12: Ausbauchung
- 13: Kalotte
- 14: Spreizlager
- 15: Rampe
- 16: Lagerkugel
- 17: Gleitlagerschale
- 18: Bremszylinder
- 19: Stößel
- 20: Lagerkalotte
- 21: Vertiefung
- 22: Rand
- 23: Nachstelleinrichtung

## Patentansprüche

1. Pneumatisch betätigbare Scheibenbremse, mit einem eine Bremsscheibe (2) übergreifenden Bremssattel (1), beidseitig an die Bremsscheibe (2) anpressbaren Bremsbelägen (3), von denen ein zuspannseitiger mittels eines um eine Exzenterachse schwenkbaren Bremshebels (5) einer Zuspanneinrichtung betätigbar ist, wobei an dem Bremshebel (5) ein Stößel (19) eines mit Druckluft beaufschlagbaren Bremszylinders (18) angreift, **dadurch gekennzeichnet, dass** eine Selbstverstärkungseinrichtung vorgesehen ist, die einen Selbstverstärkungsfaktor aufweist, der derart gewählt ist, dass sich die Bremse nach Bremsungen selbsttätig löst, und dass der Bremshebel (5) sich zumindest an einem im Bremssattel (1) gelagerten, die Exzenterdrehachse bildenden kugelförmigen Lagerelement (10) abstützt und an einem in Richtung des Stößelangriffs oberhalb des Lagerelements (10) angeordneten Lagerkugel (9) anliegt, die in einem mit dem zuspannseitigen Bremsbelag (3) verbundenen Bremsstempel (6) positioniert ist, wobei beidseitig des Bremsstempels (6), parallel und abständig dazu jeweils ein Druckstempel (7) angeordnet ist, der sich mit einem Ende am Bremssattel und mit seinem anderen Ende über eine Lagerkugel (16) am Bremsbelag (3) abstützt und die beidseitig des Bremsstempels (6) angeordneten Druckstempel (7) in einer in einem Bremsträger (8) in Richtung der Achse der Bremsscheibe (2) verschiebbar gelagerten Führungsplatte (4) gehalten sind.

2. Pneumatisch betätigbare Scheibenbremse nach Anspruch 1, **dadurch gekennzeichnet, dass** zwei Lagerelemente (10) vorgesehen sind, zwischen denen die Lagerkugel (9) angeordnet ist.

3. Pneumatisch betätigbare Scheibenbremse nach Anspruch 1 oder 2, **dadurch gekennzeichnet, dass** zur Aufnahme der Lagerelemente (10) der Bremshebel (5) eingeformte Kalotten (13) und zur Aufnahme der Lagerkugel (9) eine eingeformte Ausbauchung (12) aufweist.

4. Pneumatisch betätigbare Scheibenbremse nach einem der vorhergehenden Ansprüche, **dadurch gekennzeichnet, dass** die Lagerelemente (10) sich an Kalottenansätzen (11) des Bremssattels (1) abstützen.

5. Pneumatisch betätigbare Scheibenbremse nach einem der vorhergehenden Ansprüche, **dadurch gekennzeichnet, dass** der Stößel (19) stirnseitig in einer Lagerkalotte (20) des Bremshebels (5) einliegt.

6. Pneumatisch betätigbare Scheibenbremse nach einem der vorhergehenden Ansprüche, **dadurch gekennzeichnet, dass** ein Drehhebelübersetzungsverhältnis i = L1 (Mittelpunktsabstand der Kalotten 13 zur Lagerkalotte 20): e (Ezentrizität = Mittelpunktsabstand Kalotte 13 zur Ausbauchung 12) im Bereich von 7:1 bis 10:1 liegt, vorzugsweise 7,5:1 ist.

7. Pneumatisch betätigbare Scheibenbremse nach einem der vorhergehenden Ansprüche, **dadurch gekennzeichnet, dass** der Bremshebel (5) zumindest teilweise umlaufend mit einem abgewinkelten Rand (22) versehen ist.

8. Pneumatisch betätigbare Scheibenbremse nach einem der vorhergehenden Ansprüche, **dadurch gekennzeichnet, dass** der Drehhebel (5) als Blechformoder Gussteil ausgebildet ist.

9. Pneumatisch betätigbare Scheibenbremse nach einem der vorhergehenden Ansprüche, **dadurch gekennzeichnet, dass** der Drehhebel (5) mit zumindest einer Vertiefung (21) zur Versteifung versehen ist.

## Claims

1. Pneumatically actuated disc brake, comprising a brake calliper (1) overlapping a brake disc (2) and brake pads (3) which can be pressed against the brake disc (2) on both sides, of which an application-side brake pad (3) can be actuated by means of a brake lever (5) of an application device, which brake lever (5) is pivotable about an eccentric axis, wherein a tappet (19) of a brake cylinder (18) to which compressed air can be applied acts on the brake lever (5), **characterised in that** a self-energising device is provided, the self-energising factor of which is chosen such that the brake is released automatically after braking operations, and **in that** the brake lever (5) is supported on at least one spherical bearing element (10) bearing-mounted in the brake calliper (1) and forming the eccentric axis of rotation and bears against a bearing ball (9) which is located above the bearing element (10) in the direction of tappet action and which is positioned in a brake plunger (6) connected to the application-side brake pad (3), wherein on both sides of the brake plunger (6) there is provided parallel to and at a distance therefrom a pressure piston (7) each, one end of which is supported on the brake calliper and the other end of which is supported on the brake pad (3) via a bearing ball (16), and **in that** the pressure pistons (7) provided on both sides of the brake plunger (6) are held in a guide plate (4) mounted in an adapter (8) for displacement in the direction of the axis of the brake disc (2).

2. Pneumatically actuated disc brake according to claim 1, **characterised in that** two bearing elements (10) are provided, between which the bearing ball (9) is located.

3. Pneumatically actuated disc brake according to claim 1 or 2, **characterised in that** the brake lever (5) has formed-in spherical indentations (13) for the accommodation of the bearing elements (10) and a formed-in bulge (12) for the accommodation of the bearing ball (9).

4. Pneumatically actuated disc brake according to any of the preceding claims, **characterised in that** the bearing elements (10) are supported on indentation lugs (11) of the brake calliper (1).

5. Pneumatically actuated disc brake according to any of the preceding claims, **characterised in that** the tappet (19) lies endwise in a bearing indentation (20) of the brake lever (5).

6. Pneumatically actuated disc brake according to any of the preceding claims, **characterised in that** a rotary lever ratio i = L1 (centre distance of spherical indentations 13 from the bearing indentation 20) : e (eccentricity = centre distance of spherical indentation 13 from the bulge 12) lies in the range between 7:1 and 10:1, being preferably 7.5:1.

7. Pneumatically actuated disc brake according to any of the preceding claims, **characterised in that** the brake lever (5) is provided with an at least partially continuous angled rim (22).

8. Pneumatically actuated disc brake according to any of the preceding claims, **characterised in that** the rotary lever (5) is designed as a moulded sheet metal part or as a casting.

9. Pneumatically actuated disc brake according to any of the preceding claims, **characterised in that** the rotary lever (5) is provided with at least one recess (21) for reinforcement.

## Revendications

1. Frein à disque pouvant être actionné pneumatiquement et ayant un étrier (1) de frein recouvrant un disque (2) de frein, des garnitures (3) de frein pouvant être pressées des deux côtés sur le disque (2) de frein, dont l'une peut être actionnée du côté du serrage au moyen d'un levier (5) de frein, pouvant pivoter autour d'un axe excentré, d'un dispositif de serrage, dans lequel un poussoir (19) d'un cylindre (18) de frein, pouvant être alimenté en air comprimé, attaque le levier (5) de frein, **caractérisé en ce qu'**il est prévu un dispositif d'autoamplification, qui a un facteur d'autoamplification choisi de manière à ce que le frein se desserre automatiquement après des freinages et **en ce que** le levier (5) de frein s'appuie au moins sur un élément (10) de palier de forme sphérique monté dans l'étrier (1) de frein et formant l'axe de rotation excentré et s'applique à une bille (9) de palier montée dans la direction de l'attaque du poussoir au-dessus de l'élément (10) de palier, bille qui est placée dans un piston (6) de frein, dans lequel, des deux côtés du piston (6) de frein, est monté parallèlement à la distance respectivement un piston (7) d'application d'une pression, qui s'appuie par une extrémité sur l'étrier de frein et par son autre extrémité sur la garniture (3) de frein par l'intermédiaire d'une bille (16) de palier et les pistons (7) d'application d'une pression disposés des deux côtés du piston (6) de frein sont maintenus dans un plateau (4) de guidage monté coulissant dans la direction de l'axe du disque (2) de frein dans un support (8) de frein.

2. Frein à disque pouvant être actionné pneumatiquement suivant la revendication 1, **caractérisé en ce qu'**il est prévu deux éléments (10) de palier, entre lesquels est montée la bille (8) de palier.

3. Frein à disque pouvant être actionné pneumatiquement suivant la revendication 1 ou 2, **caractérisé en ce que**, pour la réception des éléments (10) de palier, le levier (5) de frein a des calottes (13) qui y sont formées et, pour la réception de la bille (9) de palier, une convexité (12) qui y est formée.

4. Frein à disque pouvant être actionné pneumatiquement suivant l'une des revendications précédentes, **caractérisé en ce que** les éléments (10) de palier s'appuient sur des prolongements (11) en calotte de l'étrier (1) de frein.

5. Frein à disque pouvant être actionné pneumatiquement suivant l'une des revendications précédentes, **caractérisé en ce que** le poussoir (19) entre du côté frontal dans une calotte (20) de palier du levier (5) de frein.

6. Frein à disque pouvant être actionné pneumatiquement suivant l'une des revendications précédentes, **caractérisé en ce qu'**en un rapport de démultiplication du levier en rotation i = L1 (distance du centre de la calotte 13 à la calotte 20) : e (excentricité = égal distance de la calotte 13 à la convexité 12) va de 7:1 à 10:1 en étant de préférence de 7,5:1.

7. Frein à disque pouvant être actionné pneumatiquement suivant l'une des revendications précédentes, **caractérisé en ce que** le levier (5) de frein est pourvu d'un bord (22) coudé faisant le tour au moins en partie.

8. Frein à disque pouvant être actionné pneumatiquement suivant l'une des revendications précédentes, **caractérisé en ce que** le levier (5) de rotation est constitué sous la forme d'une tôle conformée ou d'une pièce coulée.

9. Frein à disque pouvant être actionné pneumatiquement suivant l'une des revendications précédentes, **caractérisé en ce que** le levier (5) de rotation est pourvu, pour le renforcement, d'au moins un renfort (21).
